# EUROPÄISCHE PATENTANMELDUNG

(11) **EP 2 366 899 A2**
(43) Veröffentlichungstag der Anmeldung: **21.09.2011**
(21) Anmeldenummer: 11150676.2
(22) Anmeldetag: 12.01.2011
(51) Int. Cl.: F03G 7/08

(54) **Vorrichtung zur Nutzung der Bewegungsenergie von Fahrzeugen im Straßenverkehr**

(30) Priorität: 23.01.2010 DE 102010005470
(71) Anmelder: Gerhard, Stefan, 89431 Bächingen (DE)
(72) Erfinder: Gerhard, Stefan, 89431 Bächingen (DE)
(74) Vertreter: Charrier, Rapp & Liebau

(57) **Zusammenfassung**

Die Erfindung betrifft eine Vorrichtung zur Nutzung der Bewegungsenergie von Fahrzeugen im Straßenverkehr mit mindestens einer Wandlereinheit (2), die ein in eine Fahrbahn (1) einsetzbares Gehäuse (6), eine innerhalb des Gehäuses (6) in mehreren Richtungen beweglich angeordnete Tragkonstruktion (7) mit einer Überfahrplatte (8) und einen im Gehäuse (6) untergebrachten Übertragungsmechanismus (13) zur Umwandlung der beim Überfahren der Überfahrplatte (8) durch ein Fahrzeug erzeugten Bewegungen der Tragkonstruktion (7) in eine Drehbewegung einer Antriebswelle (14) aufweist, wobei der Übertragungsmechanismus (13) mehrere separate Übertragungseinrichtungen (13a, 13b, 13c, 13d, 13e) zur Umwandlung einer Absenkbewegung, der Vor- und Rückwärtsbewegung und der Seitenbewegungen der Tragkonstruktion (7) in eine Drehbewegung der Antriebswelle (14) enthält.

## Beschreibung

Die Erfindung betrifft eine Vorrichtung zur Nutzung der Bewegungsenergie von Fahrzeugen im Straßenverkehr.

Es gibt bereits den Vorschlag, einen oder mehrere mit einer Flüssigkeit oder einem Gas gefüllte Schläuche quer zur Fahrbahn zu verlegen und die beim Überfahren des Schlauches durch ein Fahrzeug erzeugte Druckerhöhung im Inneren des Schlauches zur Stromerzeugung zu nutzen. Allerdings stellen derartige Vorrichtungen in der Regel einen massiven Eingriff in den Straßenverkehr dar und können auch das Verhalten der Fahrzeuge beeinflussen. Außerdem ist die Energieausbeute solcher Vorrichtungen relativ gering, da ausschließlich die durch das Gewicht des Fahrzeugs bedingte Kraft beim Überfahren genutzt werden kann.

Aufgabe der Erfindung ist es, eine Vorrichtung der eingangs genannten Art zu schaffen, die den Verkehrsablauf nicht beeinträchtigt und einen verbesserten Wirkungsgrad aufweist.

Diese Aufgabe wird durch eine Vorrichtung mit den Merkmalen des Anspruchs 1 gelöst. Zweckmäßige Ausgestaltungen und vorteilhafte Weiterbildungen der Erfindung sind in den Unteransprüchen angegeben.

Die erfindungsgemäße Vorrichtung zeichnet sich durch mindestens ein in eine Fahrbahn einsetzbares Gehäuse, eine innerhalb des Gehäuses in mehreren Richtungen beweglich angeordnete Tragkonstruktion mit einer Überfahrplatte und einen im Gehäuse untergebrachten Übertragungsmechanismus zur Umwandlung der beim Überfahren der Überfahrplatte durch ein Fahrzeug erzeugten Bewegungen der Tragkonstruktion in eine Drehbewegung einer Antriebswelle aus, wobei der Übertragungsmechanismus mehrere separate Übertragungseinrichtungen zur Umwandlung einer Absenkbewegung, der Vor- und Rückwärtsbewegung und der Seitenbewegungen der Tragkonstruktion in eine Drehbewegung der Antriebswelle enthält.

Ein wesentlicher Vorteil der erfindungsgemäßen Vorrichtung besteht darin, dass mehrere von einem Fahrzeug in Straßenverkehr erzeugte Kräfte aufgenommen und für den Antrieb eines Generators zur Stromerzeugung oder dgl. genutzt werden können. So können nicht nur die Gewichtskräfte, sondern auch Beschleunigungs-, Brems- und Seitenkräfte genutzt werden.

In einer besonders zweckmäßigen Ausführung weisen die Übertragungseinrichtungen eine an dem Gehäuse fest angeordnete Ankerplatte und eine an dieser über ein Gestänge parallel verschiebbar geführte Tangentenplatte zur Anlage an der Tragkonstruktion auf. Das Gestänge weist in vorteilhafter Weise zwei über eine Verbindungsstange miteinander gekoppelte Schwenkhebel auf, die mit ihren einen Ende über einen Zapfen schwenkbar an der Ankerplatte angelenkt und mit ihrem anderen Ende über einen Gelenkzapfen verschiebbar in einer Führungsnut der Tangentenplatte geführt sind.

Die Tangentenplatte weist vorzugsweise eine Steuerkurve zum Eingriff mit einem ersten Hebelarm eines um ein Gelenk an der Ankerplatte schwenkbar gelagerten zweiarmigen Hebels auf. Über seinen zweiten Hebelarm ist der Hebel mit einer Zahnstange zur Drehung der Antriebswelle über einen Freilauf verbunden.

Vorzugsweise sind mehrere Wandlereinheiten mit einem Wandleraggregat zur Umwandlung des in den Wandlereinheiten erzeugten Drucks in Strom verbunden. Das Wandleraggregat kann einen oder mehrere durch die Pumpen der Wandlereinheiten gespeiste Kolbenspeicher und einen Hydraulikmotor enthalten, der über ein Getriebe mit einem Generator verbunden ist.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Vorrichtung zur Nutzung der Bewegungsenergie von Fahrzeugen mit mehreren Wandlereinheiten und einem Wandleraggregat in einer Draufsicht;
- **Figur 2**: eine Wandlereinheit der in Figur 1 gezeigten Vorrichtung in einer Schnittansicht;
- **Figur 3**: die Wandlereinheit von Figur 1 ohne Überfahrplatte in einer Draufsicht;
- **Figur 4**: eine Übertragungseinrichtung innerhalb der Wandlereinheit von Figur 1 in einer Seitenansicht und
- **Figur 5**: ein Wandleraggregat der in Figur 1 gezeigten Vorrichtung.

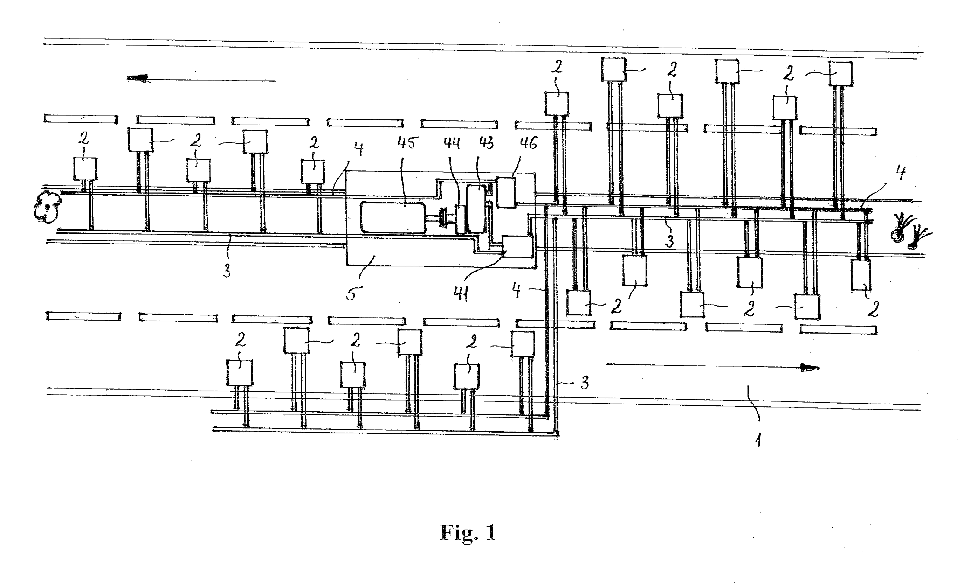

Die in Figur 1 in einer Schnittansicht gezeigte Vorrichtung zur Nutzung der Bewegungsenergie von Fahrzeugen im Straßenverkehr enthält mehrere in eine Fahrbahn 1 einsetzbare Wandlereinheiten 2, die zueinander versetzt über die Fahrbahn 1 verteilt angeordnet und über Leitungen 3 und 4 mit einem Wandleraggregat 5 verbunden sind. Die Wandlereinheiten 2 dienen zur Umwandlung der Bewegungsenergie von Fahrzeugen in einen Druck eines Druckfluids, das über die Leitungen 3 zu dem Wandleraggregat 5 geführt und über die Leitungen 4 zu den einzelnen Wandlereinheiten 2 zurückgeleitet wird. In dem Wandleraggregat 5 wird der durch die Wandlereinheiten 2 erzeugte Druck in nutzbare Energie, vorzugsweise Strom, umgewandelt.

Die einzelnen Wandlereinheiten 2 sind innerhalb der Fahrbahn 1 derart angeordnet, dass ein Fahrzeug nur zwei diagonal angeordnete Wandlereinheiten 2 gleichzeitig z.B. mit dem vorderen linken Rad und dem hinteren rechten Rad überfährt. Dadurch bleibt die Stabilität der Fahrzeuge gewährleistet.

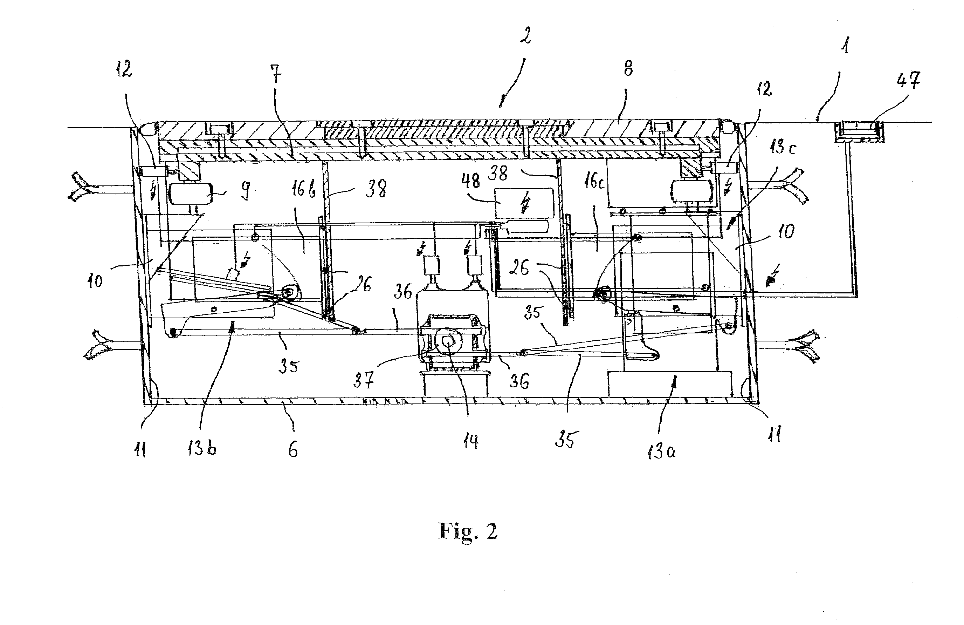

In Figur 2 ist eine einzelne Wandlereinheit 2 der in Figur 1 gezeigten Vorrichtung dargestellt. Die Wandlereinheit 2 enthält ein wannenförmiges Gehäuse 6, in dem eine in mehreren Richtungen bewegliche Tragkonstruktion 7 mit einer die Öffnung an der Oberseite des Gehäuses 6 abdeckenden Überfahrplatte 8 untergebracht ist. Die Tragkonstruktion 7 ist bei dem gezeigten Ausführungsbeispiel als Tragrahmen ausgeführt und sitzt über vertikale Dämpfungselemente 9 auf seitlichen Stützen 10 des Gehäuses 6 auf. Bei der gezeigten Ausführung sind die seitlichen Stützen 10 an den Seitenwänden 11 des Gehäuses 6 befestigt. Über horizontale Dämpfungselemente 12 ist die Tragkonstruktion 7 ferner in der horizontalen Richtung gegenüber den Seitenwänden 11 des Gehäuses 6 abgestützt. Die Tragkonstruktion 7 mit der darauf befestigten Überfahrplatte 8 ist innerhalb des Gehäuses 6 über die vertikalen und horizontalen Dämpfungselemente 9 bzw. 12 gedämpft in mehreren Richtungen beweglich angeordnet. Innerhalb des Gehäuses 6 ist ein Übertragungsmechanismus 13 zur Umwandlung der beim Überfahren der Überfahrplatte 8 durch ein Fahrzeug erzeugten Bewegungen der Tragkonstruktion 7 in eine Drehbewegung einer Antriebswelle 14 untergebracht.

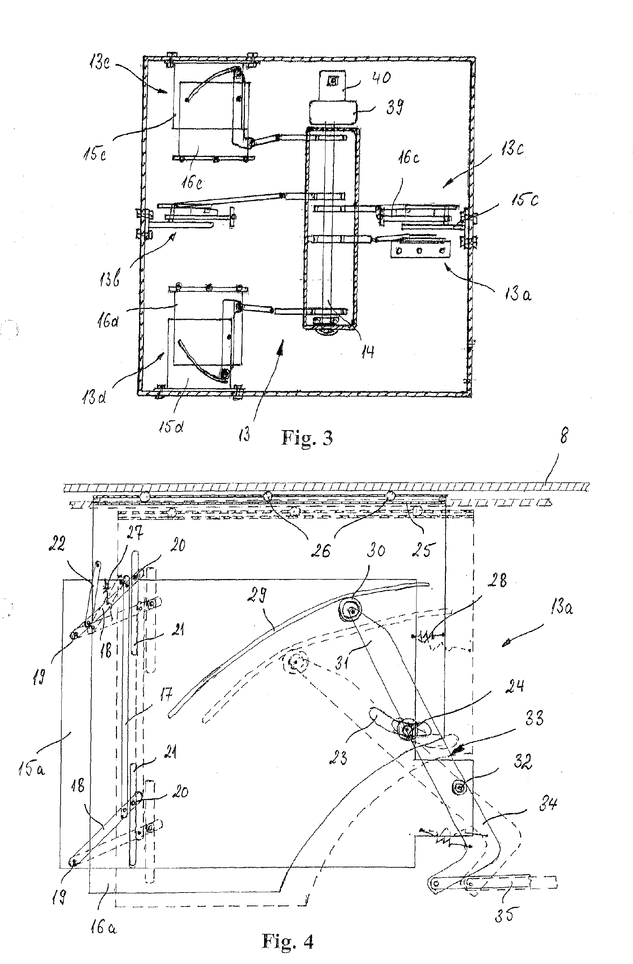

Wie besonders aus der Draufsicht von Figur 3 hervorgeht enthält der Übertragungsmechanismus 13 mehrere unterschiedlich angeordnete separate Übertragungseinrichtungen 13a, 13b, 13c, 13d und 13e, durch die nicht nur eine Absenkbewegung der Tragkonstruktion 7, sondern auch Vor- oder Rückwärtsbewegungen und seitliche Bewegungen der Tragkonstruktion 7 in eine Drehbewegung der Antriebswelle 14 umgewandelt werden können. Bei dem in Figur 2 gezeigten Ausführungsbeispiel dienen z.B. die Übertragungseinrichtung 13a zur Umwandlung der Absenkbewegung der Tragkonstruktion 7, die Übertragungseinrichtungen 13b und 13c zur Umwandlung einer Vorwärts- bzw. Rückwärtsbewegung der Tragkonstruktion 7 und die beiden Übertragungseinrichtungen 13d und 13e zur Umwandlung einer Seitwärtsbewegung der Tragkonstruktion in eine Drehbewegung der Antriebswelle 14.

In Figur 4 ist die Übertragungseinrichtung 13a zur Umwandlung einer Absenkbewegung der Tragkonstruktion 7 in eine Drehbewegung der Antriebswelle 14 in einer Seitenansicht schematisch dargestellt. Anhand dieses Beispiels werden Aufbau und Funktionsweise der der im Wesentlichen identisch aufgebauten und lediglich unterschiedlich angeordneten Übertragungseinrichtungen 13a bis 13e im Folgenden erläutert.

Wie aus Figur 4 ersichtlich ist, weist die dort dargestellte Übertragungseinrichtung 13a eine am Gehäuse 6 fest angeordnete Ankerplatte 15a und eine an der Ankerplatte 15a über eine Führung und ein Gestänge verschiebbar geführte Tangentenplatte 16a auf. Das Gestänge enthält zwei über eine Verbindungsstange 17 miteinander gekoppelte Schwenkhebel 18, die mit ihrem einen Ende über einen Zapfen 19 schwenkbar an der Ankerplatte 15a angelenkt und mit ihrem anderen Ende über einen Gelenkzapfen 20 verschiebbar in einer Führungsnut 21 der Tangentenplatte 16a geführt sind. Die Tangentenplatte 16a ist mit dem Schwenkhebel 18 außerdem über einen an der Tangentenplatte 16a und dem Schwenkhebel 18 angelenkten Verbindungshebel 22 gelenkig verbunden.

Über das Gestänge und die als Langlochverbindung ausgebildete Führung mit einem bogenförmigen Langloch 23 in der Tangentenplatte 16a und einem Führungsbolzen 24 in der Ankerplatte 15a ist die Tangentenplatte 16a durch Überfahren der auf der Tangentenplatte 16a aufliegenden Überfahrplatte 8 gegenüber der am Gehäuse 6 fest angeordnete Ankerplatte 15a aus einer mit durchgezogenen Linien gezeigten Ausgangsstellung in eine mit gestrichelten Linien gezeigte Auslenkstellung parallel verschiebbar. Die Überfahrplatte 8 liegt über mehrere innerhalb eines Käfigs 25 geführte Kugeln 26 auf der Tangentenplatte 16a auf. Durch eine zwischen der Ankerplatte 15a und einem Schwenkhebel 18 angeordnete erste Rückstellfeder 27 und eine zwischen der Ankerplatte 15a und der Tangentenplatte 16a angeordnete zweite Rückstellfeder 28 wird die Tangentenplatte 16a nach dem Überfahren der Überfahrplatte 8 wieder in ihre Ausgangsstellung zurückgedrückt.

Gemäß Figur 4 weist die Tangentenplatte 16a außerdem eine als gebogener Steg ausgebildete Steuerkurve 29 zum Eingriff mit einer Gleitrolle 30 am Ende eines ersten Hebelarms 31 eines um ein Gelenk 32 an der Ankerplatte 15a schwenkbar gelagerten zweiarmigen Steuerhebels 33 auf. Das Ende des zweiten Hebelarms 34 ist über eine Gelenkstange 35 mit einer in Figur 2 gezeigten Zahnstange 36 zur Drehung der Antriebswelle 14 über einen Freilauf 37 verbunden. Die Steuerkurve 29 ist derart ausgelegt, dass die Gelenkstange 35 bei einer Bewegung der Tangentenplatte 16a aus der mit durchgezogenen Linien gezeigten Ausgangsstellung in eine die gestrichelten Linien gezeigte Auslenkstellung über den Steuerhebel 33 zur Verschiebung der Zahnstange 36 verschoben wird. Durch die Zahnstange 36 und ein entsprechendes Zahnrad wird die Antriebswelle 14 über den Freilauf 37 gedreht.

Wie aus Figur 2 hervorgeht, sind die Übertragungseinrichtungen 13b und 13c zur Umwandlung einer durch die Brems- oder Beschleunigungskraft eines Fahrzeugs erzeugten Vor- bzw. Rückwärtsbewegung der Tragkonstruktion 7 in eine Antriebbewegung der Zahnstange gegenüber der Übertragungseinrichtung 13a für die Absenkbewegung der Tragkonstruktion um 90° gekippt an den vorderen und hinteren Seitenwänden 11 des Gehäuses 6 angeordnet und liegen mit ihren Tangentenplatten 16b und 16c über die Kugeln 26 an vertikal von der Tragkonstruktion 7 nach unten ragenden Stützen 38 an. Durch die Übertragungseinrichtungen 13b und 13c werden über Gelenkstangen 35 ebenfalls Zahnstangen 36 zum Antrieb der Antriebswelle 14 verschoben. Die Antriebswelle 14 ist über ein in Figur 3 dargestelltes Getriebe 39 mit einer Pumpe 40 verbunden.

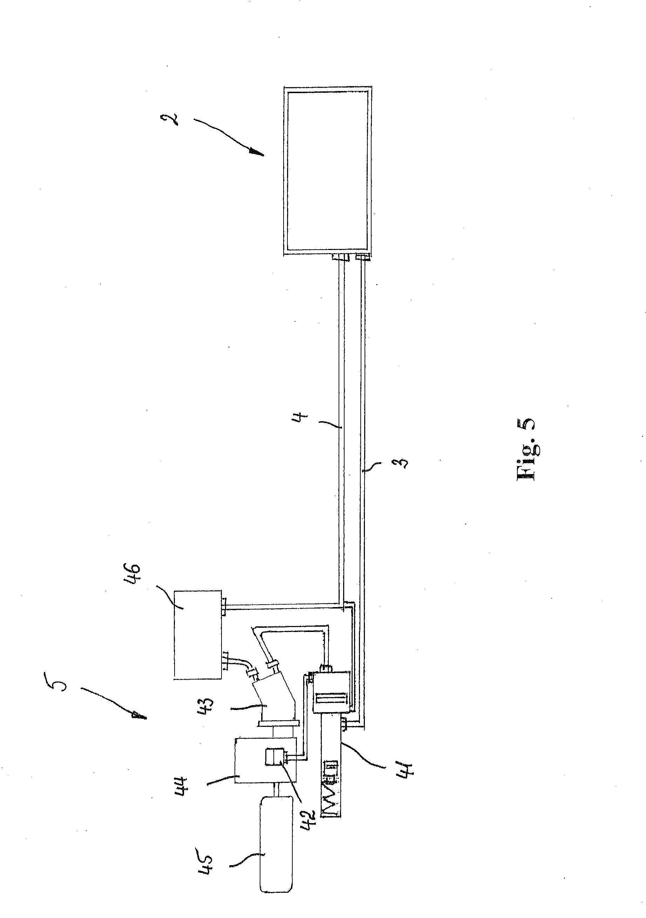

Figur 5 zeigt eine Wandlereinheit 2 und das Wandleraggregat 5, in dem der durch die Pumpe 40 in den Wandlereinheiten 2 erzeugte Druck in Strom umgewandelt wird. Das Wandleraggregat 5 enthält mehrere durch die Pumpen 40 der einzelnen Wandlereinheiten 2 gespeiste Kolbenspeicher 41, eine Ölpumpe 42 und einen Hydraulikmotor 43, der über ein Getriebe 44 mit einem Generator 45 zur Stromerzeugung verbunden ist. Über einen Ausgleichsbehälter 46 wird das von den Wandereinheiten 2 über die Leitungen 3 den Wandleraggregaten 5 zugeführte Druckfluid durch die Leitungen 4 zu den Wandlereinheiten 2 zurückgeführt. Soll der Kolbenspeicher 41 den Hydraulikmotor 43 betreiben, so wird der Weg zwischen dem Kolbenspeicher 41 und dem Hydraulikmotor 43 freigegeben. Alle anderen Wege sind dann verschlossen. Während dieser Zeit wird ein anderer Kolbenspeicher befüllt, so dass für einen kontinuierlichen Betrieb mindestens zwei Kolbenspeicher erforderlich sind.

Die Vorrichtung weist auch eine Steuerelektronik mit einem oder mehreren in der Fahrbahn 1 in Fahrrichtung gesehen vor den Wandlereinheiten 2 angeordneten Sensoren 47 auf. In Figur 2 ist ein z.B. als Drucksensor ausgebildeter Sensor 47 gezeigt. Der oder die Sensoren 47 sind mit einem Steuergerät 48 verbunden, über das eine geeignete Übersetzung des Getriebes 39 in Abhängigkeit vom Gewicht der Fahrzeuge oder anderen Betriebs- oder Umgebungsbedingungen gewählt werden kann. Außerdem kann die Vorrichtung bei Leichtfahrzeugen oder Motorrädern ggf. gesperrt werden. Auch Nebenfunktionen wie Dämpfereinstellung o.ä. können gesteuert werden.

## Patentansprüche

1. Vorrichtung zur Nutzung der Bewegungsenergie von Fahrzeugen im Straßenverkehr, **gekennzeichnet durch** mindestens eine Wandlereinheit (2), die ein in eine Fahrbahn (1) einsetzbares Gehäuse (6), eine innerhalb des Gehäuses (6) in mehreren Richtungen beweglich angeordnete Tragkonstruktion (7) mit einer Überfahrplatte (8) und einen im Gehäuse (6) untergebrachten Übertragungsmechanismus (13) zur Umwandlung der beim Überfahren der Überfahrplatte (8) **durch** ein Fahrzeug erzeugten Bewegungen der Tragkonstruktion (7) in eine Drehbewegung einer Antriebswelle (14), wobei der Übertragungsmechanismus (13) mehrere separate Übertragungseinrichtungen (13a, 13b, 13c, 13d, 13e) zur Umwandlung einer Absenkbewegung, der Vor- und Rückwärtsbewegung und der Seitenbewegungen der Tragkonstruktion (7) in eine Drehbewegung der Antriebswelle (14) enthält.

2. Vorrichtung nach Anspruch 1, **dadurch gekennzeichnet, dass** die Übertragungseinrichtungen (13a, 13b, 13c, 13d, 13e) eine an dem Gehäuse (6) fest angeordnete Ankerplatte (15a, 15b, 15c, 15d, 15e) und eine an dieser über ein Gestänge (17, 18) parallel verschiebbar geführte Tangentenplatte (16a, 16b, 16c, 16d, 16e) zur Anlage an der Tragkonstruktion (7) aufweisen.

3. Vorrichtung nach Anspruch 2, **dadurch gekennzeichnet, dass** das Gestänge (17, 18) zwei über eine Verbindungsstange (17) miteinander gekoppelte Schwenkhebel (18) enthält, die mit ihren einen Ende über einen Zapfen (19) schwenkbar an der Ankerplatte (15a, 15b, 15c, 15d, 15e) angelenkt und mit ihrem anderen Ende über einen Gelenkzapfen (20) verschiebbar in einer Führungsnut (21) der Tangentenplatte (16a, 16b, 16c, 16d, 16e) geführt sind.

4. Vorrichtung nach Anspruch 3, **dadurch gekennzeichnet, dass** die Tangentenplatte (16a, 16b, 16c, 16d, 16e) mit mindestens einem Schwenkhebel (18) über einen an der Tangentenplatte (16a, 16b, 16c, 126, 16e) und dem Schwenkhebel (18) angelenkten Verbindungshebel (22) gelenkig verbunden ist.

5. Vorrichtung nach einem der Ansprüche 2 bis 4, **dadurch gekennzeichnet, dass** die Tangentenplatte (16a, 16b, 16c, 16d, 16e) über einen Führungsbolzen (24) und ein Langloch (23) verschiebbar an der Ankerplatte (15a, 15b, 15c, 15d, 15e) geführt ist.

6. Vorrichtung nach einem der Ansprüche 2 bis 5, **dadurch gekennzeichnet, dass** die Tangentenplatte (16a, 16b, 16c, 16d, 16e) eine Steuerkurve (29) zum Eingriff mit einem ersten Hebelarm (31) eines um ein Gelenk (32) an der Ankerplatte (15a, 15b, 15c, 15d, 15e) schwenkbar gelagerten zweiarmigen Hebels (33) aufweist.

7. Vorrichtung nach Anspruch 6, **dadurch gekennzeichnet, dass** der zweiarmige Hebel (33) über seinen zweiten Hebelarm (34) mit einer Zahnstange (36) zur Drehung der Antriebswelle (14) über einen Freilauf (37) verbunden ist.

8. Vorrichtung nach Anspruch 7, **dadurch gekennzeichnet, dass** der zweite Hebelarm (34) des Hebels (33) über eine Gelenkstange (35) mit der Zahnstange (36) verbunden ist.

9. Vorrichtung nach einem der Ansprüche 1 bis 8, **dadurch gekennzeichnet, dass** die Antriebswelle (14) über ein Getriebe (39) mit einer Pumpe (40) verbunden ist.

10. Vorrichtung nach einem der Ansprüche 1 bis 9, **dadurch gekennzeichnet, dass** mehrere Wandlereinheiten (2) mit einem Wandleraggregat (5) zur Umwandlung des in den Wandlereinheiten (2) erzeugten Drucks in Strom verbunden sind.

11. Vorrichtung nach Anspruch 10, **dadurch gekennzeichnet, dass** das Wandleraggregat (5) mindestens einen durch die Pumpen (40) der Wandlereinheiten (2) gespeisten Kolbenspeicher (41) und einen Hydraulikmotor (43) enthält, der über ein Getriebe (44) mit einem Generator (45) verbunden ist.

12. Vorrichtung nach einem der Ansprüche 1 bis 11, **dadurch gekennzeichnet, dass** den Wandlereinheiten (2) mit einem Steuergerät (57) verbundene Sensoren (56) zur Steuerung der Wandlereinheiten (2) in Abhängigkeit von den Betriebs- und Umgebungsbedingungen zugeordnet sind.
